# FASCICULE DE BREVET EUROPEEN

(11) **EP 4 004 894 B1**
(45) Date de publication et mention de la délivrance du brevet: **09.10.2024**
(21) Numéro de dépôt: 20737203.8
(22) Date de dépôt: 13.07.2020
(51) Int. Cl.: G08G 5/00, G06Q 10/06, G06N 3/00, G06N 3/045, G06N 3/08

(54) **SYSTÈME ET MÉTHODE POUR LA DÉTERMINATION AMÉLIORÉE DE COMPLEXITÉ DE SECTEURS AÉRIENS**
SYSTEM UND VERFAHREN ZUR VERBESSERTEN BESTIMMUNG DER KOMPLEXITÄT VON LUFTSEKTOREN
SYSTEM AND METHOD FOR IMPROVED DETERMINATION OF THE COMPLEXITY OF AIR SECTORS

(30) Priorité: 31.07.2019 FR 1908722
(43) Date de publication de la demande: 01.06.2022
(73) Titulaire: THALES, 92190 Meudon (FR)
(72) Inventeur: PESQUET-POPESCU, Béatrice, 94150 Rungis (FR); LATGE, Dominique, 94150 Rungis (FR); LAVILLE, David, 94150 Rungis (FR); KAAKAI, Fateh, 94150 Rungis (FR)
(74) Mandataire: Atout PI Laplace
(86) Numéro de dépôt international: PCT/EP2020/069690
(87) Numéro de publication internationale: WO 2021/018556

(56) Documents cités:
- CN-A- 105 206 115
- US-A1- 2019 138 947

## Description

### Domaine de l'invention

La présente invention concerne la détermination de la complexité de traitement de situations de contrôle aérien sur des secteurs par des opérateurs, par exemple des contrôleurs aériens. La présente invention concerne également la définition de secteurs aériens, et l'affectation de ces secteurs à des opérateurs.

### Etat de l'art précédent

Les systèmes de contrôle aérien ont pour but de rendre l'exécution des vols plus sûrs, rapides et efficaces. Ils permettent de prévenir les collisions entre aéronefs, ou les situations dangereuses entre un aéronef et son environnement (météo, relief...). Ils permettent ainsi, en synchronisant de manière aussi fine que possible la circulation des aéronefs, de s'assurer d'une circulation aérienne sécurisée, mais permettent également aux aéronefs de respecter les heures de vols prévues, et d'adopter des trajectoires aussi économes que possible en carburant.

A cet effet, des contrôleurs aériens reçoivent un ensemble d'informations relatives à l'espace aérien : position et trajectoires prédites des aéronefs, la météo... Les contrôleurs peuvent également communiquer, via des messages écrits ou des communications orales, avec les pilotes des aéronefs afin de récupérer les cas échéant des informations complémentaires, et leur donner des instructions adaptées à la situation, pour garantir la sécurité de la circulation aérienne, tout en s'assurant de la meilleure qualité de service possible aux usagers du transport aérien. Par exemple, les contrôleurs aériens peuvent communiquer aux pilotes le moment opportun pour atterrir ou décoller d'un aéroport, ou au contraire leur donner l'instruction de différer leur approche si une piste d'atterrissage est utilisée par des aéronefs à l'heure initialement prévue. La qualité du travail des contrôleurs aériens est donc essentielle, pour garantir tant la sécurité que l'efficacité de la circulation aérienne.

Afin de garantir que les contrôleurs aériens sont pleinement opérationnels pour leurs missions, leur travail est régi par un cadre règlementaire strict : en particulier, afin de limiter leur fatigue, les règlementations nationales peuvent fixer un nombre d'heures de travail maximales d'affilée, par jour ou par semaine.

Le travail des contrôleurs aériens est organisé par secteurs géographiques. La complexité du travail à effectuer sur un secteur est variable en fonction d'un certain nombre de facteurs, le plus important d'entre eux étant la complexité du trafic : un contrôleur aérien ne pourra traiter efficacement qu'un nombre limité de vols simultanément. Afin de limiter la charge de travail de chaque contrôleur, un nombre variable de contrôleurs peut être affecté à chaque secteur, pour que chaque contrôleur ne traite qu'une situation dont la complexité est suffisamment faible (par exemple, comprenant un nombre de vols, de conflits de trajectoires limités, le cas échéant par rapport à des caractéristiques environnementales telles que la météo par exemple) pour exécuter son travail correctement.

Il convient donc d'affecter en permanence à chaque secteur un nombre de contrôleurs adéquat et/ou définir des secteurs de complexité adaptée pour garantir la sécurité et l'efficacité du trafic aérien. Aujourd'hui cette affectation est effectuée de manière manuelle par les équipes de contrôleurs aériens. Cependant cette affectation manuelle présente un certain nombre de limites : compte tenu des contraintes règlementaires régissant le travail des contrôleurs aériens, il n'est pas toujours aisé de disposer d'un vivier de contrôleurs aériens mobilisables en cas d'augmentation de la complexité de traitement d'un secteur, sauf à conserver en réserve un nombre élevé de contrôleurs en permanence, ce qui s'avère inefficace et coûteux.

Il est de plus difficile d'estimer a priori la complexité de traitement du trafic dans un secteur : si le nombre de vols à traiter est la principale caractéristique, d'autres éléments peuvent rentrer en ligne de compte : densité du trafic (plus une trajectoire d'aéronef interagit avec un nombre élevé d'autres trajectoires, plus son traitement sera complexe), la météo (une météo orageuse pourra par exemple complexifier le travail des contrôleurs), l'origine des aéronefs en vol (il peut être par exemple plus difficile pour un contrôleur d'interagir avec des pilotes ne parlant pas la même langue et/ou maîtrisant mal l'anglais).

Afin d'automatiser l'évaluation de la complexité de traitement d'un secteur aérien, des fonctions analytiques ont été développées, qui permettent d'évaluer à partir d'un ensemble de paramètres (positions et trajectoires prédites des aéronefs, météo...) un indice de complexité de traitement du trafic sur un secteur. Par exemple, la publication *"*Sector Complexity Study - SESAR 2020", A study commissioned by the Croatia Control Ltd, Faculty of Transport and Traffic Sciences, Univ of Zagreb, July 2018 définit des fonctions analytiques permettant de calculer un indice de complexité ATC sur un secteur aérien selon un ensemble d'indicateurs impactant la complexité de traitement d'une situation aérienne : nombre d'aérodrome, surface d'un secteur, nombre de secteurs environnants, nombre d'altitudes utilisées, vitesse moyenne des aéronefs, nombre de vols entrants, nombre de vols sortants nombre d'aéronefs en conflit, angle de convergence moyen pour les conflits, densité du trafic... Ces indicateurs peuvent être combinés au sein de fonctions complexes. La définition de fonctions analytiques de complexité a donné lieu à de très nombreuses publications telles que Laudeman, I. V., Shelden, S. G., Branstrom, R., & Brasil, C. L. (1998). Dynamic density: An air traffic management metric, Netjasov, F., Janić, M., & Tošić, V. (2011). Developing a generic metric of terminal airspace traffic complexity. Transportmetrica, 7(5), 369-394., ou Hilburn, B., & Flynn, G. (2005). Toward a non-linear approach to modeling air traffic complexity. Human Performance, Situation Awareness, and Automation: Current Research and Trends HPSAA II, Volumes I and II, 207. La publication *"*Sector Complexity Study - SESAR 2020", A study commissioned by the Croatia Control Ltd, Faculty of Transport and Traffic Sciences, Univ of Zagreb, July 2018 liste également un grand nombre de publications traitant du calcul de la complexité d'un secteur.

Cependant, ces fonctions analytiques présentent plusieurs désavantages. En premier lieu, les fonctions analytiques sont extrêmement complexes, et leur temps d'exécution varie en fonction des paramètres d'entrée, notamment du nombre et de la complexité des trajectoires d'aéronefs sur un secteur. Pour des secteurs particulièrement importants, le temps de calcul peut ainsi devenir très important, de l'ordre de plusieurs secondes. Les fonctions analytiques calculées sur CPU ne permettent ainsi pas de garantir un temps de réponse fixe et faible pour l'évaluation de la complexité d'un secteur. Dans les cas de secteurs complexes, elles ne permettent pas de garantir un temps d'exécution suffisamment faible pour assigner dynamiquement des contrôleurs en fonction de l'évolution du trafic aérien.

Les fonctions analytiques présentent également l'inconvénient de fournir une complexité théorique, mais qui ne peut pas prendre en compte l'ensemble des facteurs impactant la complexité ATC. De plus, les métriques objectives sur lesquelles se basent ces fonctions analytiques ne correspondent pas nécessairement à la complexité perçue par les contrôleurs aériens.

Les documents US 2019/138947 et CN 105206115 sont connus mais n'améliorent pas la situation.

II y a donc besoin d'une méthode de détermination de la complexité de traitement d'un secteur aérien par un contrôleur, qui puisse s'exécuter dans un temps borné, et dont le temps d'exécution soit suffisamment faible pour permettre l'utilisation des complexités calculées pour l'affectation dynamique de contrôleurs aériens à des secteurs en fonction de la complexité de traitement de ceux-ci.

Il y a également besoin d'une méthode de détermination de la complexité de traitement d'un secteur aérien par un contrôleur, qui permette de déterminer la complexité telle que perçue par les contrôleurs, de manière aussi fiable que possible.

### Résumé de l'invention

A cet effet, l'invention a pour objet une méthode mise en oeuvre par ordinateur recevant en entrée un ensemble de situations ATC définies chacune par un secteur et une période de temps, et associées chacune à un ensemble de paramètres d'entrée comprenant, pour le secteur et la période de temps : les trajectoires d'aéronefs ayant traversé le secteur ; des informations météorologiques ; ladite méthode comprenant, pour chaque situation ATC : une étape de formation d'un vecteur de paramètres d'entrée comprenant des paramètres de l'ensemble associé à la situation ATC ; une étape d'exécution d'une fonction de calcul analytique d'un indice de complexité ATC de la situation à partir des paramètres d'entrée ; ladite méthode comprenant une étape d'entrainement d'un moteur d'apprentissage automatique supervisé prenant en entrée des associations, pour chaque situation respectivement, entre son vecteur de paramètres d'entrée et son indice de complexité ATC.

Avantageusement, la méthode comprend, pour au moins une situation ATC, un apprentissage par renforcement à partir de données représentatives de la charge de travail ressentie par un contrôleur aérien dans la situation.

Avantageusement, la méthode comprend, pour au moins une situation ATC, une étape de calcul de variations de l'indice de complexité ATC à partir de données représentatives de la charge de travail ressentie par un contrôleur aérien dans la situation, enregistrées pour le secteur et pendant la période de temps, et d'apprentissage par renforcement du moteur d'apprentissage automatique supervisé à partir des variations.

Avantageusement, la méthode comprend, pour chaque situation ATC, une étape d'apprentissage par renforcement du moteur d'apprentissage supervisé, comprenant : la présentation, à au moins un contrôleur aérien, d'une situation ATC, et d'un indice de complexité ATC calculé par le moteur d'apprentissage supervisé pour cette situation ; la réception d'un écart d'indice de complexité saisi par l'au moins un contrôleur aérien ; la pénalisation de l'apprentissage en fonction de cet écart.

Avantageusement, la méthode comprend une étape de comparaison de prédictions de groupage et de dégroupage de secteurs effectués à partir d'indices de complexités ATC calculés par le moteur d'apprentissage automatique et de groupages et de dégroupages de secteurs effectués dans ledit ensemble de situations ATC par des contrôleurs.

Avantageusement, la méthode comprend la validation de l'entraînement du moteur d'apprentissage supervisé à partir desdites comparaisons.

Avantageusement, la méthode comprend un apprentissage par renforcement du moteur d'apprentissage supervisé à partir desdites comparaisons.

L'invention divulgue également un système comprenant : au moins une unité de calcul apte à entraîner un moteur d'apprentissage automatique supervisé ; un accès à accès à au moins un support de stockage d'information stockant, pour un ensemble de situations ATC définies chacune par un secteur et une période de temps, un ensemble de paramètres comprenant, pour le secteur et la période de temps : les trajectoires d'aéronefs ayant traversé le secteur ; des informations météorologiques ; l'au moins une unité de calcul étant configurée, pour chaque situation ATC, pour : former un vecteur de paramètres d'entrée comprenant des paramètres de l'ensemble associé à la situation ATC ; exécuter une fonction de calcul analytique d'un indice de complexité ATC de la situation à partir des paramètres d'entrée ; l'au moins une unité de calcul étant configurée pour entraîner un moteur d'apprentissage automatique supervisé prenant en entrée des associations, pour chaque situation respectivement, entre son vecteur de paramètres d'entrée et son indice de complexité ATC.

L'invention divulgue également un produit programme d'ordinateur comprenant des éléments de code informatique configurés pour exécuter une méthode selon l'un des modes de réalisation de l'invention.

L'invention divulgue également une méthode mise en oeuvre par ordinateur recevant en entrée, pour une situation ATC courante définie par un secteur courant et une période de temps, un ensemble de paramètres comprenant, pour le secteur courant : les trajectoires d'aéronefs traversant le secteur ; des informations météorologiques ; ladite méthode comprenant : une étape de formation, pour la situation ATC courante, d'un vecteur de paramètres d'entrée comprenant des paramètres de l'ensemble ; une étape d'exécution d'un moteur d'apprentissage supervisé pour calculer, à partir du vecteur d'entrée, un indice de complexité ATC de la situation courante, ledit moteur ayant été entraîné par une méthode selon une méthode selon l'un des modes de réalisation de l'invention.

L'invention divulgue également un produit programme d'ordinateur comprenant des éléments de code informatique configurés pour exécuter une méthode selon l'un des modes de réalisation de l'invention.

L'invention divulgue également un système comprenant : au moins une unité de calcul apte à exécuter un moteur d'apprentissage automatique supervisé ; au moins un port d'entrée apte à recevoir, pour une situation ATC courante définie par un secteur courant et une période de temps, un ensemble de paramètres comprenant, pour le secteur courant : les trajectoires d'aéronefs traversant le secteur ; des informations météorologiques ; l'au moins une unité de calcul étant configurée pour : former, pour la situation ATC courante, un vecteur de paramètres d'entrée comprenant des paramètres de l'ensemble ; exécuter ledit moteur d'apprentissage supervisé pour calculer, à partir du vecteur d'entrée, un indice de complexité ATC de la situation courante, ledit moteur ayant été entraîné par une méthode selon l'un des modes de réalisation de l'invention.

Avantageusement, l'au moins une unité de calcul est configurée pour redéfinir dynamiquement les secteurs d'un espace aérien, à partir des indices de complexité ATC calculées par le moteur d'apprentissage supervisé pour les secteurs.

Avantageusement, l'au moins une unité de calcul est configurée pour résoudre un problème d'optimisation sous contrainte, visant à minimiser le nombre total de secteurs sur un espace aérien, tout en s'assurant que la complexité ATC calculée par le moteur d'apprentissage supervisé pour chaque secteur et période de temps est inférieure à une complexité prédéfinie.

Une fois entraîné, le moteur d'apprentissage automatique est capable de prédire la complexité d'une situation à partir des paramètres de celle-ci. Un tel moteur présente l'avantage de nécessiter des ressources limitées pour prédire la complexité d'une situation aérienne donnée. Lors de la phase d'inférence, les moteurs d'apprentissage automatique peuvent ainsi prédire la complexité d'une situation dans un temps borné, quels que soient les paramètres associés à la situation, contrairement aux fonctions analytiques, dont le temps de calcul peut varier de manière importante, et devenir très important pour les situations particulièrement complexes. Ceci permet donc de s'assurer qu'il est possible de déterminer la complexité d'une situation pratiquement en temps réel.

L'invention permet une allocation dynamique des secteurs dans un espace aérien donné, afin de limiter autant que possible le nombre de secteurs, tout en s'assurant qu'aucun secteur ne dépasse un seuil de complexité au-delà duquel le secteur pourrait ne plus être traité correctement par les contrôleurs aériens.

Dans certains aspects, l'invention permet de calculer des indices de complexité ATC de manière beaucoup plus précise que les fonctions analytiques.

Dans certains aspects, l'invention permet un apprentissage de la complexité des situations ATC prenant en compte des mesures représentatives de la charge de travail ressentie par les pilotes, permettant ainsi de mieux modéliser des situations mal prises en compte par les fonctions analytiques.

Dans certains aspects, l'invention permet un apprentissage de la complexité des situations ATC très efficacement, requérant une contribution limitée des contrôleurs aériens.

D'autres caractéristiques, détails et avantages de l'invention ressortiront à la lecture de la description faite en référence aux dessins annexés donnés à titre d'exemple et qui représentent, respectivement :
La figure 1 un système de contrôle aérien, dans lequel l'invention peut être implémentée ;
La figure 2 un ensemble de secteurs sur lesquels l'invention peut être implémentée ;
La figure 3 un système de calcul permettant l'entraînement d'un moteur d'apprentissage automatique supervisé de la complexité de traitement d'une situation ATC, dans un ensemble de modes de mise en oeuvre de l'invention ;
La figure 4 une méthode d'entraînement d'un moteur d'apprentissage automatique supervisé de la complexité de traitement d'une situation ATC, dans un ensemble de modes de mise en oeuvre de l'invention ;
La figure 5 un système de calcul de la complexité de traitement d'une situation ATC utilisé un moteur d'apprentissage automatique supervisé, dans un mode de mise en oeuvre de l'invention ;
La figure 6 représente une méthode de calcul de la complexité de traitement d'une situation ATC utilisant un moteur d'apprentissage automatique supervisé, dans un mode de mise en oeuvre de l'invention.

Certains acronymes anglo-saxons couramment utilisés dans le domaine technique de la présente demande pourront être employés au cours de la description. Ces acronymes sont listés dans le tableau ci-dessous, avec notamment leur expression anglo-saxonne et leur signification.

**[Tableaux 1]**

| Acronyme | Expression | Signification |
|---|---|---|
| ACC | Area Control Center | Centre de Contrôle Régional : Centre Régional assurant la sécurité du trafic aérien. |
| AOC | Aeronautical Operational Control | Contrôle Opérationnel Aéronautique. Un ensemble ou sous-ensemble des applications utilisées par un aéronef pour communiquer avec des services au sol. |
| ATC | Air Traffic Control | Contrôle de Circulation Aérienne (CCA). Service fourni par des contrôleurs aériens au sol pour diriger un aéronef au sol en sécurité. |
| ATFM | Air Traffic Flow Management | Gestion des Flux du Trafic Aérien. Partie de la gestion du trafic aérien visant à éviter la congestion des aérodromes. |
| ATM | Air Traffic Management | Gestion du Trafic Aérien : ensemble des activités menées pour assurer la sécurité et la fluidité du trafic aérien. |
| CPDLC | Controller-Pilot Data Link Communications | Lien de données de communication contrôleur-pilote. Méthode de communication entre les contrôleurs et les pilotes, définissant un ensemble de messages élémentaires pouvant être échangés. Ces messages correspondent aux procédures utilisées pour le contrôle aérien. |
| FIR | Flight Information Région | Région d'Information de Vol : volume dans lequel un centre de contrôle donné s'assure du bon déroulement des vols. En France les FIR recoupent un espace de vol jusqu'à 19500 pieds. |
| FL | Flight Level | Niveau de Vol. En aéronautique, désigne une altitude exprimée en centaines de pieds au-dessus de la surface isobare 1013,25 hPa. |
| GPS | Global Positionning System | Système de Positionnement Global. Système de positionnement par satellite. |
| GRIB | GRIdded Binary | Format de fichier utilisé pour la diffusion des données de prévisions météorologiques. Le format GRIB est standardisé par l'Organisation Météorologique Mondiale (OMM). |
| NAS | Network Accessed Server | Serveur de Stockage en Réseau. Serveur de fichiers autonome, relié à un réseau et dont les données sont accédées à distance. |
| SIGMET | SIGnificant METeorological Information | Information Météorologique Significative. Type de message destiné aux aéronefs en vol signalant des phénomènes météorologiques très dangereux observés ou prévus. |
| UIR | Upper Information Région | Région d'Information Supérieure : Région d'Information de vol recouvrant, en France, l'espace aérien située au-delà de 19500 pieds. |
| VCS | Voice Communication Systems | Systèmes de Communication Vocaux. Systèmes de communication vocale utilisés dans le trafic aérien. |

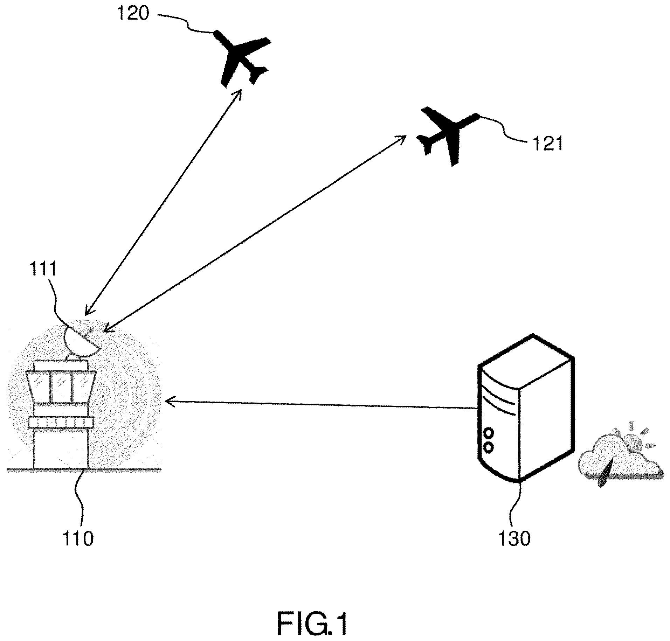

La figure 1 représente un exemple de système de contrôle aérien, dans lequel l'invention peut être implémentée.

Le système de contrôle aérien représenté en figure 1 comprend une tour de contrôle 110, équipée d'un radar 111 permettant de repérer les aéronefs 120, 121 volant dans un secteur donné. La tour de contrôle 110 peut communiquer avec les aéronefs, par exemple via une liaison radio, afin de donner des informations et instructions aux aéronefs, mais aussi de recevoir des informations et requête des aéronefs. Afin de fournir aux aéronefs les indications les plus pertinentes, la tour de contrôle peut recevoir des données de fournisseurs externes, tels qu'un serveur météo 130. Ainsi, un contrôleur aérien peut fournir des indications et instructions aux pilotes des aéronefs à partir d'un ensemble de données comprenant les trajectoires prévues des aéronefs sur son secteur, les interactions avec les pilotes, et des données d'environnement telles que des prévisions météo.

Le système de la figure 1 est donné à titre d'exemple non limitatif uniquement, et l'invention peut être implémentée dans de nombreux systèmes pour le contrôle aérien, tels que des systèmes ATC ou ATFM.

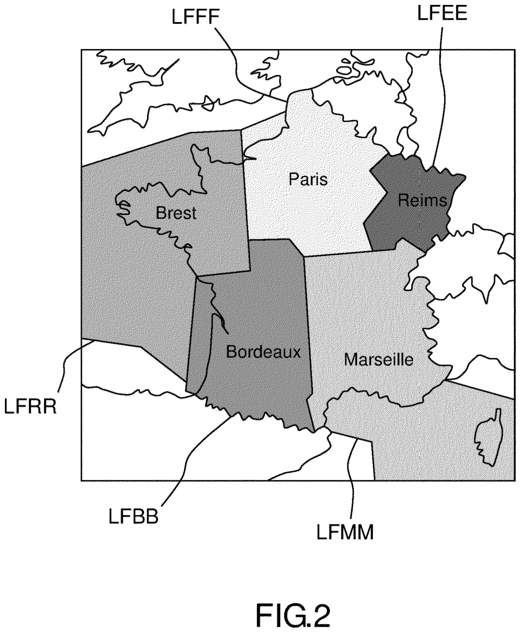

La figure 2 représente un ensemble de secteurs sur lesquels l'invention peut être implémentée.

Un espace aérien est dit contrôlé lorsque les manoeuvres des aéronefs sont soumises à clearance, c'est-à-dire une autorisation par un contrôleur aérien. La figure 2 représente l'espace aérien contrôlé en France. Le territoire métropolitain français est contrôlé par cinq centres de contrôle contrôlant chacune une FIR :
- le centre de Bordeaux contrôle la FIR LFBB ;
- le centre de Reims gère la FIR LFEE ;
- le centre de Paris gère la FIR LFFF ;
- le centre de Marseille gère la FIR LFMM ;
- le centre de Brest gère la FIR LFRR.

Les FIR couvrent en France l'espace aérien jusqu'à 19500 pieds; au-delà s'étend une UIR gérée par les 5 centres de contrôle. Ces régions sont à leur tour découpées en secteurs de contrôle, comme par exemple les secteurs dits Centre de Contrôle Régional (CCR), ou ACC en anglais. Chacun des secteurs est en permanence traversé par un certain nombre d'aéronefs. Comme expliqué ci-dessus, la complexité de traitement du trafic aérien sur un secteur est variable en fonction du nombre d'aéronef dans ce secteur, mais aussi d'autres caractéristiques telles que la météo, ou la densité de trafic. Afin que les contrôleurs puissent effectuer leurs contrôles dans de bonnes conditions, le nombre de contrôleurs affectés à un secteur peut être modulé en fonction de la complexité de traitement de celui-ci. La forme et la taille des secteurs peuvent également être adaptées.

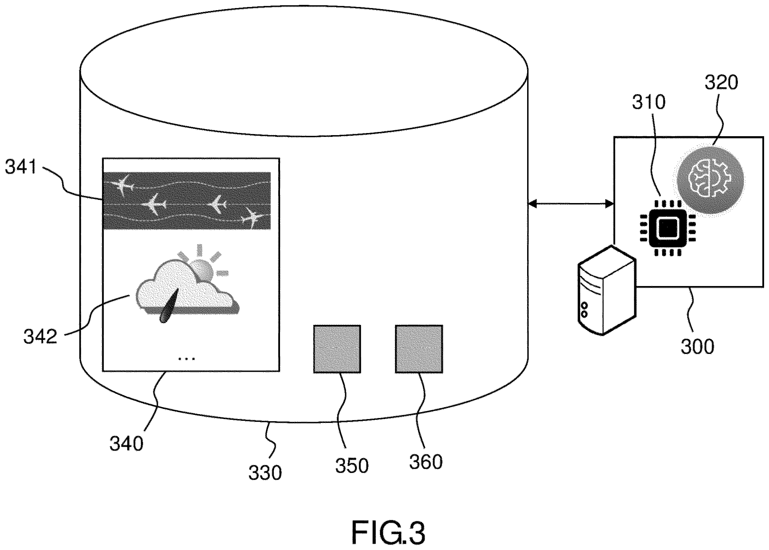

La figure 3 représente un système de calcul permettant l'entraînement d'un moteur d'apprentissage automatique supervisé de la complexité de traitement d'une situation ATC, dans un ensemble de modes de mise en oeuvre de l'invention.

Le système 300 est un système de calcul. Selon un ensemble de modes de réalisation de l'invention, le système 300 peut être un dispositif de calcul unique tel qu'un ordinateur, un serveur, ou tout autre système apte à effectuer des calculs informatiques. Le système 300 peut également comporter une pluralité de dispositifs de calcul. Par exemple, le système 300 peut être une ferme de serveurs comportant plusieurs serveurs de calcul.

Le système 300 comprend ainsi au moins une unité de calcul 310 apte à entraîner un moteur d'apprentissage automatique supervisé (ou en anglais supervised machine learning engine) 320.

L'au moins une unité de calcul 310 peut être n'importe quel type d'unité de calcul apte à effectuer des calculs informatiques. Par exemple, l'unité de calcul peut être un processeur configuré avec des instructions machines, un microprocesseur, un circuit intégré, un microcontrôleur, un circuit logique programmable, ou tout autre unité de calcul apte à être programmée pour effectuer des opérations de calcul.

Le moteur d'apprentissage automatique supervisé 320 peut être n'importe quel type de moteur d'apprentissage automatique supervisé. Par exemple, il peut s'agir d'un réseau de neurones artificiel, d'une machine à support de vecteur, ou d'un moteur d'apprentissage profond (de l'anglais deep learning), tel qu'un réseau de neurones profond, ou un réseau neuronal convolutif. Bien que tout type de moteur d'apprentissage supervisé puisse être utilisé dans l'invention, un moteur d'apprentissage supervisé basé sur un réseau de neurones est particulièrement avantageux, car il permet, une fois l'apprentissage effectué, de s'exécuter dans un temps borné. L'exécution d'un réseau de neurone artificiel, une fois entraînée, nécessite également une quantité de ressources de calcul limitée.

Le système 300 comprend un accès à au moins un support de stockage d'informations 330. L'au moins un support de stockage d'information 330 peut être de tout type de stockage apte à stoker des informations : disque dur, CD, DVD, bande magnétique, une carte mémoire, une clé USB, une mémoire Flash, une mémoire vive.

Le support de stockage d'informations peut être intégré au système 300. Par exemple, si le système 300 est un dispositif de calcul tel qu'un serveur, le support de stockage d'information peut être un disque dur du dispositif. Dans le cas où le système 300 est composé d'une pluralité de dispositifs de calcul, l'au moins un support de stockage peut être un ensemble de mémoires réparties sur les différents dispositifs de calcul.

Le système 300 peut également avoir accès à l'au moins un support de stockage d'information 330 via une connexion. Par exemple, l'au moins un support de stockage d'information peut consister en au moins un disque dur accédé à distance, par exemple via au moins un serveur NAS, ou via un système d'informatique en nuage (de l'anglais cloud computing).

L'au moins un support de stockage d'information 330 stocke, pour un ensemble de situations ATC 340 définies chacune par un secteur et une période de temps, un ensemble de paramètres comprenant :
- les trajectoires 341 d'aéronefs ayant traversé le secteur ;
- des informations météorologiques 342 pour le secteur et la période de temps.

Les trajectoires d'aéronefs 341 peuvent être exprimées de différentes manières. Par exemple, les trajectoires peuvent être exprimées sous la forme de trajectoires 4D, avec des points de passage définis par une latitude, longitude, et un FL et un temps de passage. Les trajectoires peuvent également comprendre, pour chaque point de passage, un cap associé. Une trajectoire peut également être associée à un type d'avion et/ou un callsign (dénomination d'un aéronef donné).

Les informations météorologiques 342 peuvent notamment comprendre au moins une des informations suivantes : informations chiffrées (températures, vents, pressions...), par exemple par le biais d'un fichier GRIB, texte descriptif de la météo (par exemple, présence d'une tempête, orage, etc...), messages SIGMET. De manière plus générale, tout type de données fournissant des indications sur la météo au sein du secteur peut être utilisé.

Ces paramètres correspondent à des enregistrements de situations réelles s'étant produites dans des secteurs aux périodes de temps considérées. Ils définissent ainsi, pour une situation ATC définie par un couple (secteur, période de temps) donné, les paramètres d'entrée représentatifs de la complexité de traitement du secteur. Comme indiqué ci-dessus, ces paramètres comprennent au moins les trajectoires d'aéronefs ayant traversé le secteur, et des informations météorologiques pour le secteur et la période de temps considérés.

De manière plus générale, les paramètres peuvent comprendre, selon différents modes de réalisation de l'invention, tout type de paramètres pouvant avoir un impact sur la complexité ATC.

Dans un ensemble de modes de réalisation de l'invention, l'au moins un support de stockage d'information 330 stocke également, pour chaque situation ATC, des données 350 représentatives de la charge de travail ressentie par un contrôleur aérien et enregistrées pour le secteur et pendant la période de temps correspondants. Ces données d'interactions sont des données enregistrées pour le traitement du secteur durant la période de temps.

Ces données 350 peuvent par exemple être d'un ou plusieurs types choisis parmi :
- des interactions entre des contrôleurs et une interface de contrôle aérien (nombre de clics, vitesse et temps de déplacement de curseurs de souris, etc...). En effet, un nombre d'interactions important entre le et l'interface est indicative d'une charge de travail élevée ;
- des données biométriques indicatives de la charge de travail ressentie par un contrôleur aérien : électrodes dans le cerveau, fréquence cardiaque, vitesse des mouvements oculaires... ;
- des données relatives à l'interaction entre le système ATC et d'autres systèmes : nombre de messages CPDLC, taille des communications VCS entre l'ATC et les pilotes, etc. Ici encore, un nombre et/ou une complexité élevée d'interactions entre le système de contrôle aérien et son environnement est indicatif d'une charge de travail élevée.

Ces données sont fournies à titre indicatif de d'enregistrement de données d'interaction, représentatives de la charge de travail ressentie par les contrôleurs, et toute donnée indicative de la charge de travail ressentie par les contrôleurs peut être utilisée. Ces données doivent en revanche avoir été enregistrées, durant le traitement de la situation aérienne concernée (qui correspond donc à une situation réelle ayant eu lieu par le passé) pour être représentatives de la charge de travail effectivement ressentie par le pilote.

Comme il sera expliqué plus bas, ces données permettent de prendre en compte la complexité effectivement ressentie par les contrôleurs pour l'apprentissage automatique de la complexité des situations ATC.

Dans un ensemble de modes de réalisation de l'invention, l'au moins support de stockage d'informations 330 stocke également les décisions de groupage et dégroupage de secteurs qui ont été effectuées par les contrôleurs aériens, pour certaines au moins des situations ATC 340.

Ainsi, l'au moins un espace de stockage 330 est apte à stoker, pour des situations ATC ayant eu lieu dans le passé, tout type de données traitées par un système de contrôle aérien (ATC, ATFM...) dans les situations passées, et liées directement ou indirectement à la complexité de traitement. Cet enregistrement est généralement fait de manière automatique par les systèmes de contrôle aérien, Il suffit alors de sélectionner les informations pertinentes pour les stocker.

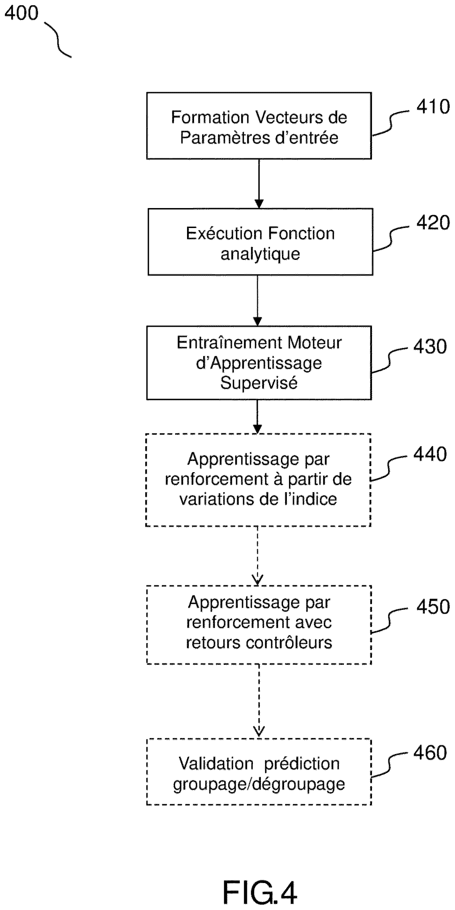

L'au moins une unité de calcul 310 est configurée pour entraîner le moteur d'apprentissage automatique 320 à calculer un indice de complexité de traitement d'un secteur dans une situation donnée. La méthode d'apprentissage mise en oeuvre par l'au moins une unité de calcul 310 est décrite plus en détail en référence à la figure 4 ci-dessous.

La figure 4 représente une méthode d'entraînement d'un moteur d'apprentissage automatique supervisé de la complexité de traitement d'une situation ATC, dans un ensemble de modes de mise en oeuvre de l'invention.

La méthode 400 prend en entrée un ensemble de situations ATC telles que les situations ATC 340. La méthode 400 comprend un sous-ensemble d'étapes destinées à associer, à chaque situation d'un ensemble, un vecteur de paramètre d'entrée et un indice de complexité de Contrôle de la Circulation Aérienne. Les étapes de la méthode 400 peuvent être exécutées sur tout ou partie des situations ATC.

La méthode 400 comprend une étape 410 de formation, à partir de l'ensemble de paramètres d'une situation ATC 340, d'un vecteur de paramètres d'entrée. Ce vecteur est formé de l'ensemble des paramètres associés à une situation ATC donnée, tels que les trajectoires de vol des aéronefs traversant le secteur, ou la météo sur le secteur durant la durée de la situation considérée. Cette étape permet de formaliser, pour chaque situation ATC, les paramètres d'entrée significatifs sous la forme d'un vecteur utilisable en entrée d'un moteur d'apprentissage automatique.

La méthode comprend une étape 420 d'exécution d'une fonction de calcul analytique d'un indice de complexité ATC à partir des paramètres d'entrée.

Une fonction analytique de calcul est une fonction permettant d'évaluer un indice de complexité de l'espace aérien par le biais d'opérations et d'équations sur les paramètres d'entrée. Ainsi, une telle fonction pourra évaluer des paramètres indicatifs de la complexité de traitement d'une situation, tels que la densité du trafic aérien, le nombre de conflits possibles entre trajectoires d'aéronefs proches, etc.

De nombreuses fonctions analytiques peuvent être utilisées. Comme indiqué ci-dessus, la publication La publication *"*Sector Complexity Study - SESAR 2020", A study commissioned by the Croatia Control Ltd, Faculty of Transport and Traffic Sciences, Univ of Zagreb, July 2018 présente de nombreuses fonctions analytiques de calcul d'une complexité ATC.

L'indice de complexité peut être exprimé de différentes manières. Par exemple, il peut être exprimé sous la forme d'une échelle, par exemple un nombre entre 0,1 et 0,9. Dans un ensemble de modes de réalisation de l'invention, la fonction de calcul de complexité consiste à effectuer une somme minute par minute d'un indicateur d'occupation/complexité de la situation. Par exemple, cet indicateur peut être initialisé à 0,9 ; augmenté de 0,2 si la tendance de vol n'est pas stable à une position de référence, et encore augmenté de 0,2 si la vitesse de vol moyenne est inférieure à 300 noeuds. Ceci permet ainsi de disposer d'un indicateur de complexité plus élevé, si les aéronefs volent vite et/ou si leurs trajectoires évoluent beaucoup. Cette fonction est donnée à titre d'exemple uniquement, et de nombreuses autres fonctions analytiques, consistant à calculer un indicateur de complexité à partir d'opérations et d'équations sur les paramètres d'entrée peuvent être utilisées.

Les étapes 410 et 420 sont répétées pour chaque situation ATC. Lorsqu'un vecteur de paramètres d'entrée, et un indice de complexité a été obtenu pour les situations voulues, la méthode 400 comprend une étape 420 d'entraînement d'un moteur d'apprentissage automatique supervisé tel que le moteur 320, ledit moteur prenant en entrée les associations, pour chaque situation respectivement, entre le vecteur de paramètres d'entrée et l'indice de complexité correspondant à chaque situation.

La méthode comprend ensuite une étape 430 d'entrainement d'un moteur d'apprentissage automatique supervisé 320 prenant en entrée des associations, pour chaque situation respectivement, entre son vecteur de paramètres d'entrée et son indice de complexité ATC.

Ainsi, pour chaque situation, le vecteur de paramètres d'entrée sert de vecteur de caractéristiques, et l'indice de complexité calculé de label. Le moteur d'apprentissage automatique 320 peut ainsi être entraîné pour prédire les résultats de la fonction analytique, pour chaque situation.

Une fois entraîné, le moteur d'apprentissage automatique 320 est capable de prédire la complexité d'une situation à partir des paramètres de celle-ci. Un tel moteur présente l'avantage de nécessiter des ressources limitées pour prédire la complexité d'une situation donnée. Les moteurs d'apprentissage automatique peuvent ainsi prédire la complexité d'une situation dans un temps borné, quels que soient les paramètres associés à la situation, contrairement aux fonctions analytiques, dont le temps de calcul peut varier de manière importante, et devenir très important pour les situations particulièrement complexes. Ceci permet donc de s'assurer qu'il est possible de déterminer la complexité d'une situation pratiquement en temps réel.

Dans un ensemble de modes de réalisation de l'invention, la méthode 400 comprend, pour au moins une situation ATC, un apprentissage par renforcement à partir de données représentatives de la charge de travail ressentie par un contrôleur aérien dans la situation.

Ceci permet de d'améliorer l'apprentissage effectué à partir des fonctions analytiques, en effectuant un renforcement à partir de données représentant, directement ou indirectement une interaction avec un contrôleur aérien dans une situation donnée. Ceci permet donc d'améliorer encore l'apprentissage, et de permettre au moteur d'apprentissage automatique d'effectuer des calculs de complexité plus proches de la réalité que ceux effectués par les fonctions analytiques. Comme il sera expliqué plus bas, ces interactions avec les contrôleurs peuvent être aussi bien directes, par le biais d'un retour d'un contrôleur sur les indices calculées, qu'indirects, par exemple par le biais de mesures représentations de l'activité ou la charge de travail d'un contrôleur enregistrées en temps réel dans la situation ATC.

Dans un ensemble de modes de réalisation de l'invention, la méthode 400 comprend, pour au moins une situation, une étape 440 de raffinement des indices de complexité à partir de données 350 représentatives de la charge de travail ressentie par un contrôleur aérien enregistrées pour le secteur et pendant la période de temps, et d'apprentissage par renforcement du moteur d'apprentissage automatique supervisé à partir de l'indice raffiné.

Le raffinement consiste à affiner les indices de complexité pour tenir compte de l'intensité des interactions survenues pendant le traitement du secteur par le contrôleur aérien durant la période de temps et/ou de la charge de travail ressentie par le contrôleur. En effet, comme indiqué ci-dessus, les données 350 sont représentatives de la complexité effective du traitement, ce qui peut permettre d'améliorer l'indice calculé par les fonctions analytiques, et d'améliorer ainsi l'apprentissage du moteur d'apprentissage supervisé 320.

Par exemple, une variation des indices de complexité peut être obtenue à partir des données 350 : une variation positive ou négative peut être appliquée, si l'indice de complexité calculé n'est pas cohérent avec les données 350 pour la situation. Par exemple, si un indice de complexité faible a été préalablement calculé, mais que les données 350 font apparaître de très nombreuses interactions entre le contrôleur et les aéronefs durant la période correspondante (par exemple, un nombre de messages CPDLC très élevé), une variation positive peut être associée à la situation. Inversement, si un indice de complexité élevé a été préalablement calculé, mais que les données 350 font apparaître une interaction faible entre le contrôleur et l'interface de contrôle aérien (nombre de clics faible, peu de déplacements de la souris...), une variation négative peut être associée à l'indice de complexité.

Une fois une variation de l'indice de complexité obtenue pour les différentes situations ATC, un apprentissage par renforcement du moteur d'apprentissage supervisé 320 est appliqué, en ré-entraînant de manière itérative le moteur d'apprentissage supervisé, avec pour objectif d'affiner l'apprentissage pour prendre en compte les variations pour chaque situation.

Dans un ensemble de modes de réalisation de l'invention, la méthode 400 comprend également, pour chaque situation, une étape 450 d'apprentissage par renforcement du moteur d'apprentissage supervisé 320 en fonction d'un feedback d'au moins un contrôleur aérien sur l'indice de complexité ATC calculé.

Cet étape consiste, dans un premier temps, à présenter à un contrôleur aérien une des situations ATC d'entraînement, et l'indice calculé par le moteur d'apprentissage supervisé 320. La présentation de la situation ATC peut s'effectuer par une mise en situation, en simulant la situation pour le contrôleur.

Une fois la situation et l'indice de complexité ATC présentés au contrôleur, celui-ci peut saisir un écart de complexité perçu. Cet écart représente la différence entre la complexité perçue par le contrôleur, et la complexité calculée par le moteur 320. Par exemple, si l'indice de complexité est exprimé sur une échelle allant de 1 à 100, le contrôleur peut saisir un écart positif s'il estime que la situation était en réalité plus complexe que ce qu'a calculé le moteur d'apprentissage supervisé, et inversement, la valeur absolue de l'écart saisi étant d'autant plus importante que le contrôleur estime que l'écart entre la complexité calculée et la complexité réelle est important.

Ensuite, cet écart est fourni au moteur d'apprentissage supervisé 320 pour un apprentissage par renforcement.

Cette procédure peut être effectuée pour plusieurs situations, par plusieurs contrôleurs.

L'apprentissage par renforcement présente l'avantage d'adapter l'apprentissage de manière très efficace avec un nombre d'entrées relativement peu important. Par exemple, la demanderesse a remarqué qu'un apprentissage par renforcement avec le traitement de 200 situations par 5 contrôleurs permettait un apprentissage très efficace, le moteur d'apprentissage supervisé 320 étant alors beaucoup plus efficace que les fonctions analytiques. Ce nombre de situations à traiter reste tout à fait raisonnable, et en tout cas inférieur de plusieurs ordres de grandeurs au nombre de situations qui auraient été nécessaires pour un apprentissage supervisé exclusivement basé sur les indices déterminés par les contrôleurs, sans avoir effectué préalablement les étapes 420 et 430.

Ces aspects de l'invention fournissent donc une méthode d'apprentissage de la complexité des situations ATC très efficace, requérant une contribution limitée des contrôleurs aériens.

Un fois le moteur d'apprentissage 320 entraîné, il est capable de calculer un indice de complexité d'une situation ATC donnée, à partir d'un vecteur de données du même type que ceux avec lesquels il a été entraîné, comprenant notamment des informations météo et des trajectoires d'aéronef sur un secteur pour une période de temps donné.

Ceci permet d'affecter à un secteur un nombre de contrôleurs aériens adapté, mais aussi d'adapter le nombre et la taille des secteurs aériens d'un espace, en fonction de la complexité de ceux-ci. Cette adaptation d'un espace aérien peut notamment se faire par le groupage de secteurs, c'est-à-dire la fusion de plusieurs secteurs en un seul, ou leur dégroupage, c'est-à-dire la séparation d'un secteur aérien en plusieurs sous-secteurs.

Le groupage et le dégroupage peuvent d'effectuer de différentes manières. Par exemple, si la complexité de deux secteurs contigus devient inférieure à un seuil prédéfini, ils peuvent être groupés en un seul. Inversement, si la complexité d'un secteur aérien devient supérieure à un seuil prédéfini, il peut être dégroupé en plusieurs.

Par exemple, le groupage peut s'effectuer selon un algorithme d'optimisation d'arbre parcouru de bas en haut : chacune des feuilles représente un secteur élémentaire le plus petit possible, puis les secteurs contigus sont groupés itérativement par 2 ou 4 jusqu'à la racine qui correspond au secteur le plus grand possible, par exemple un FIR entier. La complexité est calculée de bas en haut pour chaque secteur élémentaire, puis pour chaque groupe possible de secteur. Les secteurs peuvent alors être groupés si une ou plusieurs conditions sont réunies : si la complexité d'un groupe est plus petite que la somme des complexités des secteurs élémentaires qui le constituent, si la complexité d'un groupe est inférieure à un seuil prédéfini, etc.

Il est donc possible, une fois le moteur entraîné, d'effectuer, pour les situations ATC 340, des prédictions rétroactives de groupage et de dégroupages de secteurs, c'est-à-dire de déterminer quelles auraient été les décisions de groupage et dégroupage de secteurs effectuées, dans les situations 340, à partir des indices de complexité calculés par le moteur d'apprentissage supervisé 320 une fois entraîné.

Ces prédictions peuvent être comparées avec les décisions 360 ayant effectivement été prises par les contrôleurs dans ces situations.

Ceci peut par exemple être utilisé pour valider l'entraînement du moteur d'apprentissage supervisé 320 : si les décisions prédites à partir des calculs de complexité sont, de manière générale, suffisamment proches des décisions effectivement prises par les contrôleurs aériens, on peut considérer que l'entraînement du moteur 320 a été concluant, et lui permet de prédire de manière appropriée la complexité des situations ATC.

Ceci peut également permettre d'améliorer encore l'apprentissage par renforcement du moteur 320 : un apprentissage par renforcement peut être effectué, visant à minimiser les écarts entre les prédictions de groupage/dégroupage de secteur effectuées à partir des calculs de complexité effectués par le moteur 320, et les décisions effectivement prises par les contrôleurs.

Dans la figure 4, les étapes de la méthode 400 sont présentées dans l'ordre suivant : étapes 410, 420, 440, 450, 460 puis 460. Cependant, cet ordre est donné à titre indicatif, et, selon certains modes de réalisation de l'invention, certaines étapes peuvent ne pas être effectuées, ou être effectuées dans des ordres différents. Par exemple, il est possible de n'effectuer qu'une seule des étapes d'apprentissage par renforcement 440 et 450, de les effectuer dans l'ordre inverse que celui présenté en figure 4 (étape 450 puis 440), ou de les exécuter en parallèle.

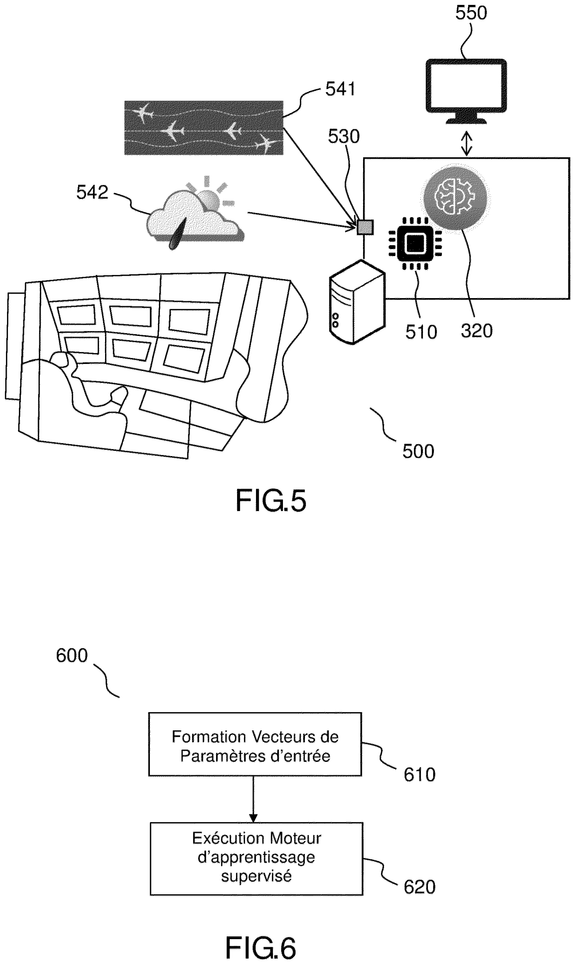

La figure 5 représente un système de calcul de la complexité de traitement d'une situation ATC utilisé un moteur d'apprentissage automatique supervisé, dans un mode de mise en oeuvre de l'invention.

Le système 500 peut être par exemple un système ATM, ATC ou ATFM, permettant aux contrôleurs aériens de contrôler la situation aérienne sur un secteur donné.

Le système 500 est un système de calcul. Selon un ensemble de modes de réalisation de l'invention, le système 300 peut être un dispositif de calcul unique tel qu'un ordinateur, un serveur, ou tout autre système apte à effectuer des calculs informatiques. Le système 500 peut également comporter une pluralité de dispositifs de calcul. Par exemple, le système 500 peut être une ferme de serveurs comportant plusieurs serveurs de calcul.

Le système 500 comprend ainsi au moins une unité de calcul 510 apte à exécuter un moteur d'apprentissage automatique supervisé 320, similaire au moteur d'apprentissage supervisé présenté en figure 3. Selon un ensemble de modes de réalisation de l'invention, le moteur d'apprentissage automatique supervisé 320 a été entraîné par une méthode telle que la méthode 400, et/ou un système tel que le système 300.

L'au moins une unité de calcul 310 peut être n'importe quel type d'unité de calcul apte à effectuer des calculs informatiques. Par exemple, l'unité de calcul peut être un processeur configuré avec des instructions machines, un microprocesseur, un circuit intégré, un microcontrôleur, un circuit logique programmable, ou tout autre unité de calcul apte à être programmée pour effectuer des opérations de calcul.

Le système 500 comprend au moins un port d'entrée 530 apte à recevoir un ensemble de paramètres relatifs à une situation aérienne courante sur un secteur. Les paramètres sont du même type que les paramètres d'entrée 340. Le système 500 peut donc recevoir :
- les trajectoires 541 d'aéronefs traversant le secteur. Selon différents modes de réalisation, ces trajectoires peuvent comprendre des trajectoires instantanées et/ou des trajectoires prédites ;
- des informations météorologiques 542 pour le secteur.

Selon divers mode de réalisation, d'autres types de paramètres d'entrée peuvent être reçus.

Les paramètres d'entrée peuvent être reçus de différentes manières. Par exemple, les trajectoires d'aéronefs peuvent être reçues par communication radio avec les aéronefs, par le biais de mesures radars, etc. Les informations météo peuvent être reçues par exemple par le biais de mesures d'un radar météo, par abonnement à un service météorologique.

A cet effet, l'au moins un port 530 peut être de différents types : connexion internet, liaison radio, etc. L'invention n'est pas restreinte à un type de port d'entrée, et l'homme de l'art pourra adapter la réception des paramètres d'entrée aux canaux d'entrée disponibles. De même, selon différents modes de mise en oeuvre de l'invention, les différents paramètres d'entrée peuvent être reçus sur un port unique, ou plusieurs ports, de même type ou de types différents. Par exemple, les trajectoires d'aéronefs 541 peuvent être reçues par liaison radio, et les informations météorologiques 542 par une connexion internet.

L'au moins une unité de calcul 510 est configurée pour former, pour la situation ATC courante, un vecteur de paramètres d'entrée comprenant des paramètres de l'ensemble.

L'au moins une unité de calcul 510 est également configurée pour calculer, à partir du vecteur d'entrée, un indice de complexité ATC de la situation courante.

Le système 500 est ainsi capable de calculer un indice de complexité ATC de la situation courante, tout en bénéficiant des avantages de l'entraînement du moteur d'apprentissage supervisé.

En particulier, le moteur d'apprentissage supervisé 320 permet de calculer des indices de complexité ATC avec des besoins en ressources limités, et un temps d'exécution déterministe. Ceci permet de prendre en compte l'évolution de la complexité des secteurs au cours du temps de manière réactive.

Une fois l'indice de complexité ATC calculé, le système 500 peut l'utiliser de différentes manières. Par exemple, il peut l'afficher à au moins un opérateur, par exemple un contrôleur aérien, par le biais d'au moins un écran 550. Ceci permet à l'opérateur de vérifier que le nombre de contrôleur aérien affecté à une situation / un secteur donné est adéquat en fonction de la complexité de ceux-ci. Il peut également lever une alerte, soit si la complexité ATC d'une situation est trop importante par rapport au nombre de contrôleurs affectés à son traitement, soit elle est trop faible, auquel cas un trop grand nombre de contrôleurs aérien est mobilisé pour cette situation.

Dans un ensemble de modes de réalisation de l'invention, l'au moins une unité de calcul 510 est configurée pour redéfinir dynamiquement la forme et la taille des secteurs, afin de former une nombre de secteur aussi faible que possible, tout en s'assurant que la complexité ATC de chaque secteur est inférieure à un seuil prédéfini.

Ceci peut par exemple être réalisé si l'au moins une unité de calcul est configurée pour résoudre un problème d'optimisation sous contrainte, visant à minimiser le nombre de secteurs, avec la contrainte que la complexité ATC de chaque secteur soit inférieure ou égale à un seuil de complexité prédéfini. Ce seuil de complexité peut par exemple être un seuil au-dessus duquel le secteur devient trop complexe à traiter par les contrôleurs aérien.

A chaque itération d'optimisation, la complexité ATC d'une situation représentée par un secteur et une période donnée peut être calculée par le moteur d'apprentissage supervisé 320. Contrairement aux méthodes analytiques, le temps de calcul de la complexité d'un secteur par le moteur d'apprentissage supervisé 320 est borné et déterministe. Ceci permet donc de résoudre un problème d'optimisation sous contrainte, recalculant à chaque itération la complexité pour chaque secteur et période de temps. Ceci permet ainsi une allocation dynamique des secteurs aériens. Par exemple, la sectorisation de l'espace aérien peut être redéfinie par périodes d'une heure.

Ceci permet de disposer d'un nombre de secteurs aussi faible que possible, et ainsi de limiter le nombre de contrôleurs nécessaire pour les traiter, tout en s'assurant qu'ils puissent être traités correctement par les contrôleurs. Ceci permet également de prédire de manière dynamique le nombre de contrôleurs qui devra être affecté à un espace aérien pour chaque période de temps.

La figure 6 représente une méthode de calcul de la complexité de traitement d'une situation ATC utilisant un moteur d'apprentissage automatique supervisé, dans un mode de mise en oeuvre de l'invention.

La méthode 600 reçoit en entrée, pour une situation ATC courante définie par un secteur courant et une période de temps, un ensemble de paramètres comprenant, pour le secteur courant :
- les trajectoires d'aéronefs 541 traversant le secteur ;
- des informations météorologiques 542.

La méthode comprend une étape 610 de formation, pour la situation ATC courante, d'un vecteur de paramètres d'entrée comprenant des paramètres de l'ensemble.

La méthode comprend ensuite une étape 620 d'exécution d'un moteur d'apprentissage supervisé 320 pour calculer, à partir du vecteur d'entrée, un indice de complexité ATC de la situation courante, ledit moteur ayant été entraîné par la méthode 400.

Tous les modes de réalisation discutés en référence aux figures 3 à 5 sont respectivement applicables à la méthode 600.

Les exemples ci-dessus démontrent la capacité de l'invention à calculer la complexité de traitement d'une situation ATC. Ils ne sont cependant donnés qu'à titre d'exemple et ne limitent en aucun cas la portée de l'invention, définie dans les revendications ci-dessous.

## Revendications

1. Méthode mise en oeuvre par ordinateur (400) recevant en entrée un ensemble de situations ATC (340) définies chacune par un secteur et une période de temps, et associées chacune à un ensemble de paramètres d'entrée comprenant, pour le secteur et la période de temps :
- les trajectoires d'aéronefs (341) ayant traversé le secteur ;
- des informations météorologiques (342) ;
ladite méthode comprenant, pour chaque situation ATC :
- une étape (410) de formation d'un vecteur de paramètres d'entrée comprenant des paramètres de l'ensemble associé à la situation ATC ;
- une étape (420) d'exécution d'une fonction de calcul analytique d'un indice de complexité ATC de la situation à partir des paramètres d'entrée ;
ladite méthode comprenant une étape (430) d'entrainement d'un moteur d'apprentissage automatique supervisé (320) prenant en entrée des associations, pour chaque situation respectivement, entre son vecteur de paramètres d'entrée et son indice de complexité ATC.

2. Méthode selon la revendication 1, comprenant, pour au moins une situation ATC, un apprentissage par renforcement (440, 450) à partir de données représentatives de la charge de travail ressentie par un contrôleur aérien dans la situation.

3. Méthode selon l'une des revendications 1 à 2, comprenant, pour au moins une situation ATC, une étape (440) de calcul de variations de l'indice de complexité ATC à partir de données (350) représentatives de la charge de travail ressentie par un contrôleur aérien dans la situation, enregistrées pour le secteur et pendant la période de temps, et d'apprentissage par renforcement du moteur d'apprentissage automatique supervisé à partir des variations.

4. Méthode selon l'une des revendications 1 à 3 comprenant, pour chaque situation ATC, une étape (450) d'apprentissage par renforcement du moteur d'apprentissage supervisé (320), comprenant :
- la présentation, à au moins un contrôleur aérien, d'une situation ATC, et d'un indice de complexité ATC calculé par le moteur d'apprentissage supervisé (320) pour cette situation ;
- la réception d'un écart d'indice de complexité saisi par l'au moins un contrôleur aérien ;
- la pénalisation de l'apprentissage en fonction de cet écart.

5. Méthode selon l'une des revendications 1 à 4, comprenant une étape (460) de comparaison de prédictions de groupage et de dégroupage de secteurs effectués à partir d'indices de complexités ATC calculés par le moteur d'apprentissage automatique et de groupages et de dégroupages de secteurs effectués dans ledit ensemble de situations ATC par des contrôleurs.

6. Méthode selon la revendication 5, comprenant la validation de l'entraînement du moteur d'apprentissage supervisé à partir desdites comparaisons.

7. Méthode selon l'une des revendications 5 à 6, comprenant un apprentissage par renforcement du moteur d'apprentissage supervisé à partir desdites comparaisons.

8. Système (300) comprenant :
- au moins une unité de calcul (310) apte à entraîner un moteur d'apprentissage automatique supervisé (320) ;
- un accès à au moins un support de stockage d'information (330) stockant, pour un ensemble de situations ATC (340) définies chacune par un secteur et une période de temps, un ensemble de paramètres comprenant, pour le secteur et la période de temps :
- les trajectoires d'aéronefs (341) ayant traversé le secteur ;
- des informations météorologiques (342) ;
l'au moins une unité de calcul (310) étant configurée, pour chaque situation ATC, pour :
- former (410) un vecteur de paramètres d'entrée comprenant des paramètres de l'ensemble associé à la situation ATC ;
- exécuter (420) une fonction de calcul analytique d'un indice de complexité ATC de la situation à partir des paramètres d'entrée ;
l'au moins une unité de calcul étant configurée pour entraîner (430) un moteur d'apprentissage automatique supervisé (320) prenant en entrée des associations, pour chaque situation respectivement, entre son vecteur de paramètres d'entrée et son indice de complexité ATC.

9. Produit programme d'ordinateur comprenant des instructions de code de programme pour l'exécution des étapes de la méthode selon l'une des revendications 1 à 7 lorsque ledit programme est exécuté sur un ordinateur.

10. Méthode mise en oeuvre par ordinateur (600) recevant en entrée, pour une situation ATC courante définie par un secteur courant et une période de temps, un ensemble de paramètres comprenant, pour le secteur courant :
- les trajectoires d'aéronefs (541) traversant le secteur ;
- des informations météorologiques (542) ;
ladite méthode (600) comprenant :
- une étape (610) de formation, pour la situation ATC courante, d'un vecteur de paramètres d'entrée comprenant des paramètres de l'ensemble ;
- une étape (620) d'exécution d'un moteur d'apprentissage supervisé (320) pour calculer, à partir du vecteur d'entrée, un indice de complexité ATC de la situation courante, ledit moteur ayant été entraîné par une méthode selon l'une des revendications 1 à 7.

11. Produit programme d'ordinateur comprenant des instructions de code de programme pour l'exécution des étapes de la méthode selon la revendication 10 lorsque ledit programme est exécuté sur un ordinateur.

12. Système (500) comprenant :
- au moins une unité de calcul (510) apte à exécuter un moteur d'apprentissage automatique supervisé (320) ;
- au moins un port d'entrée (530) apte à recevoir, pour une situation ATC courante définie par un secteur courant et une période de temps, un ensemble de paramètres comprenant, pour le secteur courant :
- les trajectoires d'aéronefs (541) traversant le secteur ;
- des informations météorologiques (542) ;
l'au moins une unité de calcul (310) étant configurée pour :
- former (610), pour la situation ATC courante, un vecteur de paramètres d'entrée comprenant des paramètres de l'ensemble ;
- exécuter (620) ledit moteur d'apprentissage supervisé (320) pour calculer, à partir du vecteur d'entrée, un indice de complexité ATC de la situation courante, ledit moteur ayant été entraîné par une méthode selon l'une des revendications 1 à 7.

13. Le système de la revendication 12, dans lequel l'au moins une unité de calcul (510) est configurée pour redéfinir dynamiquement les secteurs d'un espace aérien, à partir des indices de complexité ATC calculées par le moteur d'apprentissage supervisé (320) pour les secteurs.

14. Le système de la revendication 13, dans lequel l'au moins une unité de calcul (510) est configurée pour résoudre un problème d'optimisation sous contrainte, visant à minimiser le nombre total de secteurs sur un espace aérien, tout en s'assurant que la complexité ATC calculée par le moteur d'apprentissage supervisé (320) pour chaque secteur et période de temps est inférieure à une complexité prédéfinie.

## Patentansprüche

1. Computerimplementiertes Verfahren (400), das als Eingabe einen Satz von ATC-Situationen (340) empfängt, die jeweils durch einen Sektor und eine Zeitperiode definiert und jeweils mit einem Satz von Eingabeparametern assoziiert sind, die für den Sektor und die Zeitperiode Folgendes umfassen:
- die Flugbahnen (341) von Luftfahrzeugen, die den Sektor durchquert haben;
- meteorologische Informationen (342);
wobei das Verfahren für jede ATC-Situation Folgendes umfasst:
- einen Schritt (410) des Bildens eines Eingabeparametervektors, der Parameter des mit der ATC-Situation assoziierten Satzes umfasst;
- einen Schritt (420) des Ausführens einer analytischen Funktion zum Berechnen eines ATC-Komplexitätsindex der Situation auf der Basis der Eingabeparameter;
wobei das Verfahren einen Schritt (430) des Trainierens einer Engine (320) für überwachtes maschinelles Lernen umfasst, der als Eingabe für jede Situation jeweils Assoziationen zwischen seinem Eingangsparametervektor und seinem ATC-Komplexitätsindex hat.

2. Verfahren nach Anspruch 1, das für mindestens eine ATC-Situation Enforcement-Learning (440, 450) auf der Basis von Daten umfasst, die für die von einem Fluglotsen in der Situation erfahrene Arbeitslast repräsentativ sind.

3. Verfahren nach einem der Ansprüche 1 bis 2, das für mindestens eine ATC-Situation einen Schritt (440) des Berechnens von Variationen des ATC-Komplexitätsindex auf der Basis von Daten (350), die für die von einem Fluglotsen in der Situation erfahrene Arbeitslast repräsentativ sind und für den Sektor und während der Zeitperiode aufgezeichnet wurden, und von Reinforcement-Learning der Engine für überwachtes maschinelles Lernen auf der Basis der Variationen umfasst.

4. Verfahren nach einem der Ansprüche 1 bis 3, das für jede ATC-Situation einen Schritt (450) des Reinforcement-Learning der Engine (320) für überwachtes Lernen umfasst, der Folgendes umfasst:
- Präsentieren, mindestens einem Fluglotsen, einer ATC-Situation und eines ATC-Komplexitätsindex, der von der Engine (320) für überwachtes Learning für diese Situation berechnet wurde;
- Empfangen einer Komplexitätsindex-Abweichung, die von dem mindestens einen Fluglotsen erfasst wird;
- Pönalisieren des Lernens in Abhängigkeit von dieser Abweichung.

5. Verfahren nach einem der Ansprüche 1 bis 4, das einen Schritt (460) des Vergleichens von Sektorgruppierungs- und -entgruppierungsvorhersagen, die auf der Basis von von der Machine-Learning-Engine berechneten ATC-Komplexitätsindizes vorgenommen wurden, und von in dem Satz von ATC-Situationen von Fluglotsen vorgenommenen Sektorgruppierungen und -entgruppierungen umfasst.

6. Verfahren nach Anspruch 5, das das Validieren des Trainings der Engine für überwachtes Lernen auf der Basis der Vergleiche umfasst.

7. Verfahren nach einem der Ansprüche 5 bis 6, das Reinforcement-Learning der Engine für überwachtes Lernen auf der Basis der Vergleiche umfasst.

8. System (300), das Folgendes umfasst:
- mindestens eine Recheneinheit (310), die eine Engine (320) für überwachtes maschinelles Lernen trainieren kann;
- Zugang zu mindestens einem Informationsspeichermedium (330), das für einen Satz von jeweils durch einen Sektor und eine Zeitperiode definierten ATC-Situationen (340) einen Satz von Parametern speichert, der für den Sektor und die Zeitperiode Folgendes umfasst:
- Flugbahnen (341) von Luftfahrzeugen, die den Sektor überquert haben;
- meteorologische Informationen (342);
wobei die mindestens eine Recheneinheit (310) für jede ATC-Situation konfiguriert ist zum:
- Bilden (410) eines Eingabeparametervektors, der Parameter des mit der ATC-Situation assoziierten Satzes umfasst;
- Ausführen (420) einer analytischen Funktion zur Berechnung eines ATC-Komplexitätsindex der Situation auf der Basis der Eingabeparameter;
wobei die mindestens eine Recheneinheit zum Trainieren (430) einer Engine (320) für überwachtes maschinelles Lernen konfiguriert ist, die als Eingabe Assoziationen für jede Situation jeweils zwischen ihrem Eingabeparametervektor und ihrem ATC-Komplexitätsindex hat.

9. Computerprogrammprodukt, das Programmcode-Befehle zur Ausführung der Schritte des Verfahrens nach einem der Ansprüche 1 bis 7 bei Ausführung des Programms auf einem Computer umfasst.

10. Computerimplementiertes Verfahren (600), das für eine durch einen aktuellen Sektor und eine Zeitperiode definierte aktuelle ATC-Situation einen Satz von Parametern als Eingabe erhält, der für den aktuellen Sektor Folgendes umfasst:
- Flugbahnen (541) von Luftfahrzeugen, die den Sektor durchqueren;
- meteorologische Informationen (542);
wobei das Verfahren (600) Folgendes umfasst:
- einen Schritt (610) des Bildens, für die aktuelle ATC-Situation, eines Eingabeparametervektors, der Parameter des Satzes umfasst;
- einen Schritt (620) des Ausführens einer Engine (320) für überwachtes Lernen, um auf der Basis des Eingabevektors einen ATC-Komplexitätsindex für die aktuelle Situation zu berechnen, wobei die Engine durch ein Verfahren nach einem der Ansprüche 1 bis 7 trainiert wurde.

11. Computerprogrammprodukt, das Programmcode-Befehle zur Ausführung der Schritte des Verfahrens nach Anspruch 10 umfasst, wenn das Programm auf einem Computer ausgeführt wird.

12. System (500), das Folgendes umfasst:
- mindestens eine Recheneinheit (510), die zum Ausführen einer Engine (320) für überwachtes maschinelles Lernen geeignet ist;
- mindestens einen Eingangsport (530), der für eine durch einen aktuellen Sektor und eine Zeitperiode definierte aktuelle ATC-Situation einen Satz von Parametern empfangen kann, der für den aktuellen Sektor Folgendes umfasst:
- Flugbahnen (541) von Luftfahrzeugen, die den Sektor durchqueren;
- meterologische linformationen (542);
wobei die mindestens eine Recheneinheit (310) konfiguriert ist zum:
- Bilden (610), für die aktuelle ATC-Situation, eines Eingabeparametervektors, der Parameter des Satzes umfasst;
- Ausführen (620) der Engine (320) für überwachtes Lernen, um auf der Basis des Eingabevektors einen ATC-Komplexitätsindex für die aktuelle Situation zu berechnen, wobei die Engine durch ein Verfahren nach einem der Ansprüche 1 bis 7 trainiert wurde.

13. System nach Anspruch 12, wobei die mindestens eine Recheneinheit (510) zum dynamischen Neudefinieren der Sektoren eines Luftraums auf der Basis der von der Engine (320) für überwachtes Lernen (320) für die Sektoren berechneten ATC-Komplexitätsindizes konfiguriert ist.

14. System nach Anspruch 13, wobei die mindestens eine Recheneinheit (510) zum Lösen eines eingeschränkten Optimierungsproblems konfiguriert ist, das darauf abzielt, die Gesamtzahl von Sektoren in einem Luftraum zu minimieren, während sie stellt sicher, dass die von der Engine (320) für überwachtes Lernen (320) für jeden Sektor und jede Zeitperiode berechnete ATC-Komplexität unter einer vordefinierten Komplexität liegt.

## Claims

1. A computer-implemented method (400) that receives as input a set of ATC situations (340) each defined by a sector and a time period, and each associated with a set of input parameters comprising, for the sector and the time period:
- the paths (341) of aircrafts having crossed the sector;
- meteorological information (342);
said method comprising, for each ATC situation:
- a step (410) of forming a vector of input parameters comprising parameters of the set associated with the ATC situation;
- a step (420) of executing an analytical function for computing an ATC-complexity index of the situation, on the basis of the input parameters;
said method comprising a step (430) of training a supervised machine-learning engine (320) that has as input, for each situation respectively, associations between its vector of input parameters and its ATC-complexity index.

2. The method according to claim 1, comprising, for at least one ATC situation, reinforcement learning (440, 450) on the basis of data representative of the workload experienced by an air-traffic controller in the situation.

3. The method according to one of claims 1 to 2, comprising, for at least one ATC situation, a step (440) of computing variations in the ATC-complexity index on the basis of data (350) which are representative of the workload experienced by an air-traffic controller in the situation and which are recorded for the sector and during the time period, and of reinforcement learning for the supervised machine-learning engine, on the basis of the variations.

4. The method according to one of claims 1 to 3, comprising, for each ATC situation, a step (450) of reinforcement learning for the supervised learning engine (320), comprising:
- presenting an ATC situation and an ATC-complexity index computed by the supervised learning engine (320) for this situation, to at least one air-traffic controller;
- receiving a complexity-index discrepancy entered by the at least one air-traffic controller;
- applying a penalty to the learning depending on this discrepancy.

5. The method according to one of claims 1 to 4, comprising a step (460) of comparing sector grouping and ungrouping predictions made on the basis of ATC-complexity indices computed by the machine-learning engine with sector groupings and ungroupings performed by controllers in said set of ATC situations.

6. The method according to claim 5, comprising validating the training of the supervised learning engine on the basis of said comparisons.

7. The method according to one of claims 5 to 6, comprising reinforcement learning for the supervised learning engine on the basis of said comparisons.

8. A system (300) comprising:
- at least one computing unit (310) able to train a supervised machine-learning engine (320);
- an access to at least one information storage medium (330) storing, for a set of ATC situations (340) each defined by a sector and a time period, a set of parameters comprising, for the sector and the time period:
- the paths (341) of aircrafts having crossed the sector;
- meteorological information (342);
the at least one computing unit (310) being configured, for each ATC situation, to:
- form (410) a vector of input parameters comprising parameters of the set associated with the ATC situation;
- execute (420) an analytical function for computing an ATC-complexity index of the situation, on the basis of the input parameters;
the at least one computing unit being configured to train (430) a supervised machine-learning engine (320) that has as input, for each situation respectively, associations between its vector of input parameters and its ATC-complexity index.

9. A computer program product comprising program code instructions for executing the steps of the method according to one of claims 1 to 7 when said program is executed on a computer.

10. A computer-implemented method (600) that receives as input, for a current ATC situation defined by a current sector and a time period, a set of parameters comprising, for the current sector:
- the paths (541) of aircrafts crossing the sector;
- meteorological information (542);
said method (600) comprising:
- a step (610) of forming, for the current ATC situation, a vector of input parameters comprising parameters of the set;
- a step (620) of executing a supervised learning engine (320) to compute, on the basis of the input vector, an ATC-complexity index of the current situation, said engine having been trained using a method according to one of claims 1 to 7.

11. A computer program product comprising program code instructions for executing the steps of the method according to claim 10 when said program is executed on a computer.

12. A system (500) comprising:
- at least one computing unit (510) able to execute a supervised machine-learning engine (320);
- at least one input port (530) able to receive, for a current ATC situation defined by a current sector and a time period, a set of parameters comprising, for the current sector:
- the paths (541) of aircrafts crossing the sector;
- meteorological information (542);
the at least one computing unit (310) being configured to:
- form (610), for the current ATC situation, a vector of input parameters comprising parameters of the set;
- execute (620) said supervised learning engine (320) to compute, on the basis of the input vector, an ATC-complexity index of the current situation, said engine having been trained using a method according to one of claims 1 to 7.

13. The system of claim 12, wherein the at least one computing unit (510) is configured to dynamically redefine the sectors of an airspace, on the basis of the ATC-complexity indices computed by the supervised learning engine (320) for the sectors.

14. The system of claim 13, wherein the at least one computing unit (510) is configured to solve a constrained optimisation problem, aiming to minimise the total number of sectors in an airspace, while ensuring that the ATC complexity computed by the supervised learning engine (320) for each sector and time period is less than a predefined complexity.
